(19) 

**Europäisches Patentamt**

**European Patent Office**

**Office européen des brevets**

(11) **EP 4 358 017 A1**

(12) **EUROPEAN PATENT APPLICATION**

(43) Date of publication:
**24.04.2024 Bulletin 2024/17**

(21) Application number: **22290057.3**

(22) Date of filing: **19.10.2022**

(51) International Patent Classification (IPC):
**G06T 5/00** (2024.01)

(52) Cooperative Patent Classification (CPC):
**G06T 5/94;** G06T 2207/20208

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **Chaboud, Emmanuel**
**92100 Boulogne-Billancourt (FR)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **METHOD AND APPARATUS FOR CONVERTING AN HDR IMAGE FILE INTO AN LDR IMAGE FILE**

(57) The present application relates to a method for converting a high dynamic range, HDR, image file into a low dynamic range, LDR, image file, wherein the method comprises the following steps:
- providing (110) an HDR image file to a processing unit (14);
- applying (120), by the processing unit (14), a smoothing filter on the provided HDR image file;
- applying (130), by the processing unit (14), a Naka Rushton function on the HDR image file using the filtered image file as eye adaptation intensity;
- conducting (140), by the processing unit (14), a response mapping on the output of the Naka-Rushton function; and
- applying (150), by the processing unit (14), an inverse Naka-Rushton function on the output of the response mapping.

Fig. 2

**Description**

Technical field

The present invention relates to the field of image processing. More particularly, the present invention relates to a method for converting a high dynamic range (HDR) image file into a low dynamic range (LDR, also sometimes referred to as standard dynamic range or SDR) image file and a corresponding apparatus. Furthermore, the present invention relates to a method for displaying an LDR image file and a display device. The present invention can, in particular, be applied in digital cameras and/or smartphones,

Background

High dynamic range (HDR) images cannot be displayed on typical display devices without an additional processing, since their dynamic range exceeds the dynamic range of common display devices.

Tone-mapping methods attempt to solve this issue by compressing the higher dynamic range of the image to the lower dynamic range of the display, so that the image can be displayed. The mentioned methods are responsible to provide images as close as possible to the real-world scene. This raises several challenges. Firstly, the processed image should have a good exposure, whatever the scene lighting condition may be, which can range from night to mid-day sun, including back-lit. Secondly, the contrast of the image should be pleasing and natural from dark regions to bright ones. Shadows should be dark enough and highlights should not look flat. Furthermore, details in the whole image need to be maintained, independently of the current lighting amount. Thirdly, typical artifacts induced by the local compression of the dynamic range are halos and contrast reversions, which should be avoided as far as possible.

The field of the tone-mapping methods has been researched actively for the last several decades. One method that is frequently applied is the Laplacian pyramid-based tone-mapping method (see reference [1]), which is considered as one of the state-of-the-art local tone-mapping methods. One benefit of said method is that it generates only very minor artifacts (like halos) compared to other methods. This method relies on the decomposition of an image into multiple layers, wherein each layer is enhanced independently before being collapsed back into the image. By manipulating the constructed Laplacian pyramid, the image contrast can be enhanced and the image shadows or highlights can be boosted. However, the overall image exposure cannot be controlled.

On the other hand, Pattanaik et al. (see reference [2]) proposed a global tone mapping operator that is based on human vision system (HVS) in order to match a user's visual responses to those it would have experienced for a real-world scene. The mentioned method applies a linear mapping from real-world scene visual responses to display visual responses in order to provide a realistic appearance. However, due the global nature of the operator, meaning that the same curve is applied to all pixels, this method cannot be applied to HDR images without losing the local contrast.

Furthermore, Ledda et al. (see reference [3]) proposed a local tone mapping operator based on the HVS. This approach is similar to the approach described in reference [2], except that the eye adaptation is computed locally using a bilateral smoothing filter. This allows to preserve the local image contrast. However, the bilateral filter is prone to artifacts like halos.

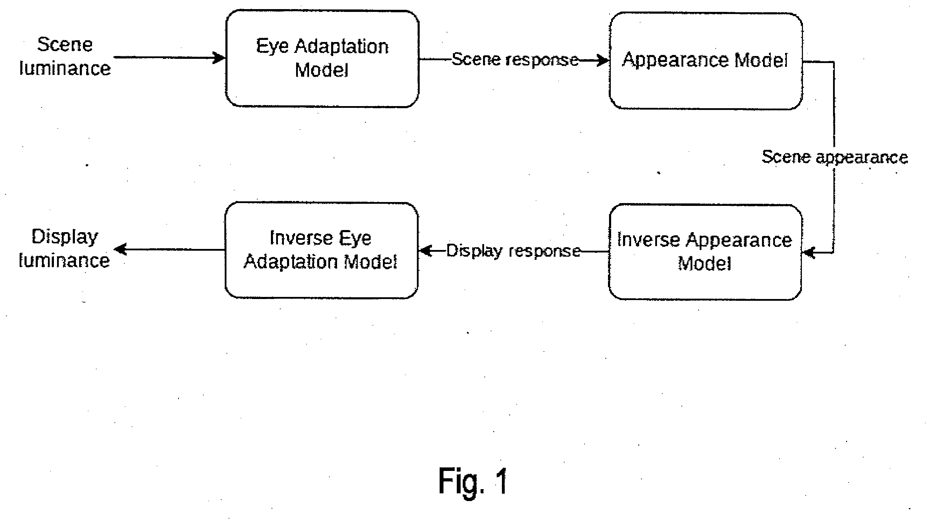

The basic principle of the method described in reference [2] is illustrated in Fig. 1. According to this method, the input scene luminances are converted to visual responses. The tone compression is done by applying a simple appearance model to the responses, that consists in a black point, a white point, and a linear scaling. Finally, the responses are converted back to display luminances.

However, the approach described in reference [2] uses a global operator that does not appear to be suited for HDR images. Furthermore, the approach described in reference [3] uses a local operator based on bilateral filter that is prone to artifacts. They both do not allow for contrast manipulation, and use a simple linear appearance model that does not work well depending on the scene dynamic range, and that is not able to get the desired exposure and contrast for HDR images,

As discussed above, the methods known from the prior art show several drawbacks such as undesired artifacts or unnatural representation of the compressed LDR image file. Therefore, the present invention is provided to enable the generation of LDR image files that allow to display the images free of artifacts and exhibiting a natural representation.

Summary

In order to solve the above-discussed problem, with the present invention, a method is proposed for converting a high dynamic range (HDR) image file into a low dynamic range (LDR) image file, wherein the method comprises the following steps:

- providing an HDR image file to a processing unit;

- applying, by the processing unit, a smoothing filter on the provided HDR image file;
- applying, by the processing unit, a Naka-Rushton function parametrized by the filtered image file, on the HDR image file;
- conducting, by the processing unit, a response mapping on the output of the Naka-Rushton function; and
- applying, by the processing unit, an inverse Naka-Rushton function on the output of the response mapping.

The present invention allows to generate an LDR image file from a provided HDR image file, wherein the LDR image file allows to be displayed on a convention display device, while the displayed image exhibits no or very little artifacts, wherein the displayed image maintains its natural characteristics at the same time.

Preferably, the smoothing filter may be a Local Laplacian Filter (LLF). In the following, for illustration purposes, the implementation of the LLF will be described in more detail. However, the present invention is not limited to the implementation of an LLF, but also encompasses the alternative use of other edge-aware smoothing filters, such as a bilateral filter, a guided filter, an anisotropic diffusion filter, or a total variation filter.

The HDR image file may comprise e.g. 14 Bits of information for each pixel, wherein the generated LDR image file comprises e.g. 8 Bits for each pixel. Hence, the image file is compressed without losing any significant image information or details. By applying the Naka-Rushton function (also referred to as the Naka-Rushton model or the Naka-Rushton equation), the human vision characteristics are taken into account. The Naka-Rushton function can be applied by using the following equation:

$$ R(I) = R_{max} \frac{I^n}{I^n + \sigma^n} $$

wherein I is the light intensity of each pixel of the input image, R is the neural response ($0 < R < R_{max}$), σ is the semi-saturation constant corresponding to the intensity value that causes the half-maximum response, and n is a sensitivity control parameter which is similar to gamma for video, film, and CRTs. Furthermore, σ can be defined as follows:

$$ \sigma = \beta A^{\alpha} $$

wherein α and β describe two constants controlling the image exposure, and A describes the intensity of the eye adaptation. A is given by the smoothened HDR image given by the Local Laplacian Filter. Hence, according to. the present invention, the Local Laplacian filtered image can be used as eye adaptation in the Naka-Rushton function.

Accordingly, the inverse Naka-Rushton function is the reverse function of the above Naka-Rushton equation.

With regard to the response mapping, the goal is to find a mapping M such that the corresponding response may be computed as follows:

$$ R_{scene\,black} = R\left( I_{scene\,black} \right) $$

$$ R_{scene\,white} = R\left( I_{scene\,white} \right) $$

wherein R is the Naka-Rushton function as already defined above and I_scene_black describes the minimum intensity of the scene and I_scene_white the maximum intensity of the scene. Similarly, given I_display_black as the minimum intensity of the display and I_display_white as the maximum intensity of the display, the corresponding responses may be computed as follows:

$$R_{display\ black} = R\left(I_{display\ black}\right)$$

$$R_{display\ white} = R\left(I_{display\ white}\right)$$

Furthermore, it may be desirable to compress the image from the scene intensity range to the display intensity range, such that looking at the display gives similar responses than looking at the actual scene. This is equivalent to finding a response mapping function M that maps R_scene_black to R_display_black and R_scene_white to R_display_white, such that:

$$R\left(I_{display}\right) = M\left(R\left(I_{scene}\right)\right)$$

and thus:

$$I_{display} = R^{-1}\left(M\left(R\left(I_{scene}\right)\right)\right)$$

The above equation essentially corresponds to the tone mapping method according to the present invention, wherein a Naka-Rushton is applied on an HDR image, then a response mapping function is applied on the response, and finally an inverse Naka-Rushton is applied to compute the display intensity (which is the LDR image).

The response mapping function may be implemented using quadratic Bezier curves. A quadratic Bezier curve is defined by three control points P0 = (x0, y0), P1 = (x1, y1) and P2 = (x2, y2). Then a quadratic Bezier curve B is defined for t in [0, 1] as follows:

$$B(t) = (1-t)^2 P_0 + 2(1-t)t P_1 + t^2 P_2$$

In particular, the response mapping function may be made of two Bezier curves (one for dark regions, one for bright regions) with control points P0, P1, and P2 computed so that:

- M(R_scene_black) = R_display_black
- M(R_scene_white) = R_display_white
- M(R_scene_mean) = R_display_mean in order to preserve the exposure.

Preferably, providing an HDR image file comprises the following steps:

- providing a first HDR image file comprising relative luminance values to the processing unit;
- providing metadata to the processing unit, wherein the metadata comprises at least one of an exposure parameter of an image, a light sensitivity parameter of an image, or an aperture parameter of an image;
- calculating, by the processing unit, a second HDR image file comprising absolute luminance values from the first HDR image file and the provided metadata.

Hence, the absolute luminance values can be calculated from the relative values provided by a camera device. According to this preferred embodiment, the metadata can be used to more precisely calculate the absolute luminance values by considering one or several recording parameters of the camera device, which describe under which circumstances an image was recorded. In this way, a calibration can be performed that leads to a more precise calculation of the second HDR image file comprising absolute luminance values. The metadata may comprise one or several of an exposure parameter that was set while recording an image, a light sensitivity parameter that was set while recording an image, or an aperture parameter that was set while recording an image. The light sensitivity parameter might comprise an ISO value that was set during the capturing of the image. After calculating the second HDR image file based on the first HDR image file and the provided metadata, the second HDR image file can be used for the further processing steps, e.g. as an input to the Local Laplace Filter.

Preferably, a Local Laplacian Filter is applied on the provided HDR image file, wherein the following steps are comprised:

- calculating, by the processing unit, a logarithmic representation of the HDR image file;
- applying, by the processing unit, the Local Laplacian Filter on the logarithmic representation of the HDR image file; and
- calculating, by the processing unit, an inverse logarithmic operator on the Local Laplacian filtered HDR image file.

Hence, the Local Laplacian Filter can preferably be applied in the logarithmic domain before the following steps are conducted in the linear domain.

Preferably, conducting a response mapping comprises the step of applying local tone curves on the output of the Naka-Rushton function. Experimental studies have shown that applying local tone curves contributes to improve the representation of the generated LDR image file,

Preferably, the local tone curves are defined by non-linear functions. Further experimental studies have shown that providing local tone curves defined by non-linear functions further contributes to improve the quality of the LDR image files.

Preferably, the local tone curves are defined by Bezier curves. Different representations of tone curves have been investigated in experimental studies underlying the present invention. The studies have shown that local tone curves defined by Bezier curves particularly qualify to generate LDR image files that exhibit natural image characteristics. Hence, using Bezier curves according to preferred embodiments of the present invention leads to particularly good image results.

Preferably, conducting a response mapping comprises the step of applying a global tone curve on the output of the Naka-Rushton function. More preferably, the global tone curve is defined by a non-linear function. According to some preferred embodiments, the global tone curve is defined by a Bezier curve.

According to a further aspect of the present invention, a method for displaying a low dynamic range (LDR) image file on a display device is provided. The method comprises the steps of the method for converting a high dynamic range (HDR) image file into a low dynamic range (LDR) image file as described above and, in addition, the following steps:

- converting the output of the inverse Naka-Rushton function comprising absolute luminance values to an output image file comprising relative luminance values; and
- displaying the output image file on the display device.

Hence, the method for displaying the LDR image file uses the calculated LDR image file comprising absolute luminance values and converts them to relative luminance values (i.e. values between 0 and 1) that are typically needed to display an image on a display device.

According to a further aspect of the present invention, an image signal processing apparatus for converting a high dynamic range (HDR) image file into a low dynamic range (LDR) image file is provided, wherein the image signal processing apparatus comprises a storage unit and a processing unit, and wherein the processing unit is configured to:

- receive an HDR image file to be converted;
- apply a smoothing filter on the received HDR image file;
- apply a Naka Rushton function on the HDR image file using the filtered image file as eye adaptation intensity;
- conduct a response mapping on the output of the Naka-Rushton function; and
- apply an inverse Naka-Rushton function on the output of the response mapping.

In particular, the applied smoothing filter may be a Local Laplacian Filter. However, as discussed above, other smoothing filters may also be applied by the processing unit.

The image signal processing apparatus can be implemented as a stand-alone device specifically designed for the purpose of the image conversion, or can be implemented as an integrated part of a camera device or a smartphone. For example, the image signal processing apparatus can be an ISP (Image Signal Processor) or a DSP (Digital Signal Processor) of a mobile phone,

Preferably, the processing unit is further configured to:

- receive a first HDR image file comprising relative luminance values;
- receive metadata from a camera device, wherein the metadata comprises at least one of an exposure parameter of an image, a light sensitivity parameter of an image, an aperture parameter of an image; and
- calculate a second HDR image file comprising absolute luminance values from the first HDR image file and the received metadata.

Preferably, the processing unit is further configured to:

- calculate a logarithmic representation of the HDR image file;
- apply the Local Laplacian Filter on the logarithmic representation of the HDR image file; and
- calculate an inverse logarithmic operator on the Local Laplacian filtered HDR image file.

Preferably, the processing unit is further configured to:

- apply local tone curves on the output of the Naka-Rushton function.

Preferably, the local tone curves are defined by non-linear functions.

Preferably, the local tone curves are defined by Bezier curves.

According to a further embodiment of the present invention, a display device is provided comprising a display panel for displaying a low dynamic range (LDR) image file, and the image converting apparatus described above.

The present invention preferably combines the benefits of HVS-based tone-mapping with state-of-the-art Laplacian pyramid-based tone-mapping. In particular, the invention provides an artifact-free contrast manipulation strength provided by the Local Laplacian Filter method, and preferably adds means to manipulate the image exposure according to HVS. Thus, it is possible to compress HDR images while producing pleasant image brightness and contrast with adaptation to the scene luminance. In addition to this, user-tunable parameters can preferably be provided in order to manipulate the exposure, contrast, and shadows / highlights level. This allows to solve the following deficiencies of the technical solutions as described in the prior art.

Firstly, the Laplacian pyramid-based tone-mapping itself is not able to manipulate the image exposure and to reduce the image dynamic range. Secondly, the HVS methods described in the literature either use unsuitable global operators, or simple local operators like bilateral filters that produce artifacts and do not allow to manipulate multi-scale contrast layers like the Laplacian pyramid. In addition to this, the methods described in the prior art use simple linear appearance models that are not suited to HDR scenes.

The present invention provides a novel tone-mapping principle, with image exposure and contrast adaptation based on the scene luminance and the human vision system. The optimal exposure and contrast may be determined in a way that is consistent with the human vision system, with automatic adaptation to the absolute scene luminance. Outdoor images will get an exposure and contrast consistent with our vision in normal lighting conditions, while night images will get an exposure and contrast consistent with our vision in low light. This ensures natural-looking results for all lighting conditions, without the need of manual tuning for each lighting condition, which is the case of most of other tone-mapping methods known from the prior art.

Some aspects of the present invention can be summarized as follows.

Firstly, the absolute luminance (in nits or $cd/m^2$ unit) can be determined for each pixel given its value, and the image's shooting parameters (exposure time, ISO, aperture).

Secondly, the response of the human vision system for a given luminance is given by the Naka-Rushton model. The Naka-Rushton model has been determined experimentally by conducting psychometric experiences and fitting the response of the eye to a stimulus when adapted to a background luminance. Respecting the Naka-Rushton model is a key point that allows the tone-mapping method according to the present invention to adapt and to get plausible exposure and contrast given in the input scene luminance.

Thirdly, a local map of the eye adaptation luminance can be obtained by smoothing the input image in the log domain using a smoothing filter, such as the Local Laplacian Filter (LLF) method. LLF is a state-of-the-art edge-aware contrast manipulation method that is proven to produce very few artifacts like halos. It is noted that the application of other edge-aware smoothing filters is also possible. For instance, a bilateral filter may be used. In addition, a guided filter may also be used, wherein a guided filter shows a better edge behavior than a bilateral filter. Other candidates of the smoothing filter that may be implemented according to the present invention Include anisotropic diffusion filter, total variation filter, or any other filter that smooths away the textures while retaining sharp edges.

Furthermore, the amount of global contrast and local contrast can be tuned to the desired value. This may be done by applying additional tone curves above the Naka-Rushton response, both on the eye adaptation luminance and the scene luminance. These tone curves may be computed using Bezier segments and consider the Naka-Rushton response, the scene black level, and the scene white level in order to adapt to each scene exposure and dynamic range.

Moreover, the tone-mapping result can be adapted to the display characteristics. In fact, the tone-mapped scene luminance is displayed by considering the eye adaptation to the average luminance of a standard display viewed in standard lighting conditions. Thus, the method can be scaled to other displays (for example HDR displays) by changing this parameter to the desired value of the target display. In addition to this, it can also adapt to any dynamic change of the display, for example a change of display brightness depending on the surroundings conditions.

Brief description of the drawings

In the following, reference will be made to the accompanying drawings which illustrate exemplary embodiments of the present invention, wherein the attached figures show the following:

Fig. 1    a schematic representation of tone-mapping according to the prior art,
Fig. 2    a schematic representation of an embodiment of the method according to the present invention,
Fig. 3    a schematic representation of an embodiment of the display device according to the present invention,
Fig. 4    a schematic representation of a further embodiment of the method according to the present invention,
Fig. 5    a schematic representation of implementing the Naka-Rushton model according to some embodiments of the present invention,
Fig. 6    a schematic representation of a global tone curve and local tone curves according to some embodiments of the present invention, and
Fig. 7    a comparison of an HDR image file processed by using a tone-mapping method according to the prior art and the same image file processed with the method according to the present invention.

Detailed description of the drawings

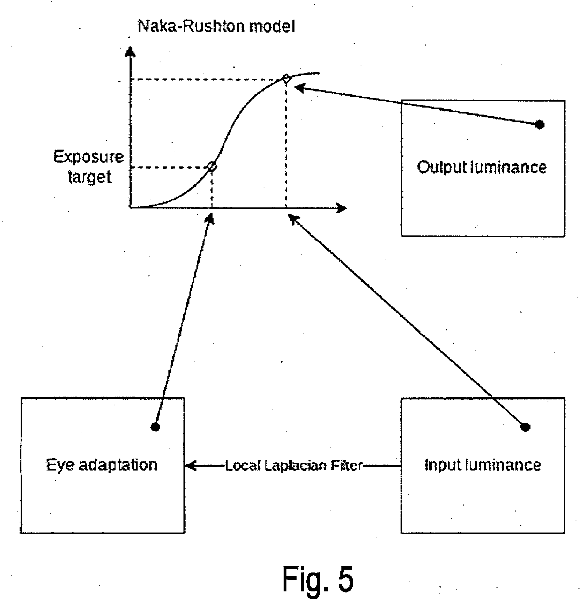

In Fig, 1, a schematic representation of tone-mapping according to the prior art (see reference [2]) is illustrated, which has been discussed above in the background section.

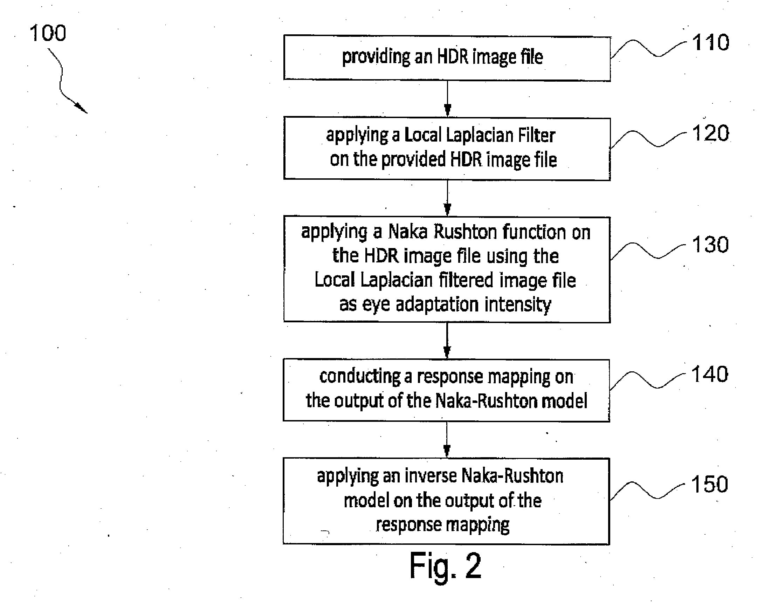

In Fig. 2, a schematic representation of an embodiment of the method 100 according to the present invention is illustrated. In a first method step 110, an HDR image file is provided to a processing unit. Subsequently, in a second method step 120, the processing unit applies a Local Laplacian Filter on the provided HDR image file. As discussed above, other smoothing filters different from the Local Laplacian Filter may also be applied. In a third method step 130, the processing unit applies a Naka-Rushton function on the HDR image file using the Local Laplacian filtered image file as eye adaptation intensity. In a fourth method step 140, the processing unit conducts a response mapping on the output of the Naka-Rushton function. Finally, in a fifth method step 150, the processing unit applies an inverse Naka-Rushton function on the output of the response mapping.

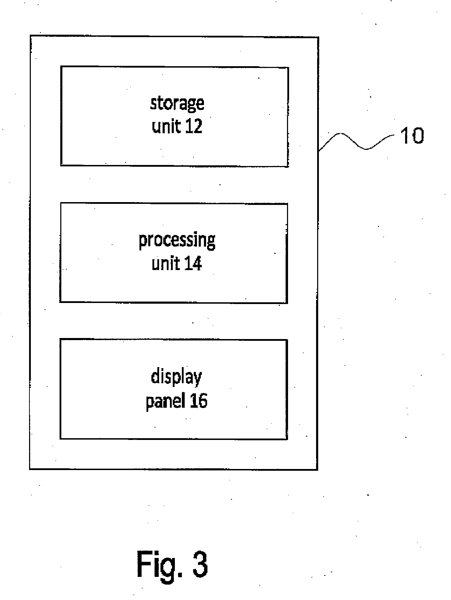

In Fig. 3, a schematic representation of an embodiment of the display device 10 according to the present invention is illustrated. The display device 10 comprises a storage unit 12, a processing unit 14 and a display panel 16. The storage unit 12 is configured to store the provided image and the processed version of the image. The processing unit 14 is configured to perform the method steps described above with reference to Fig. 2. The display panel 16 is configured to display the processed version of the provided HDR image file, i.e. the calculated LDR image file.

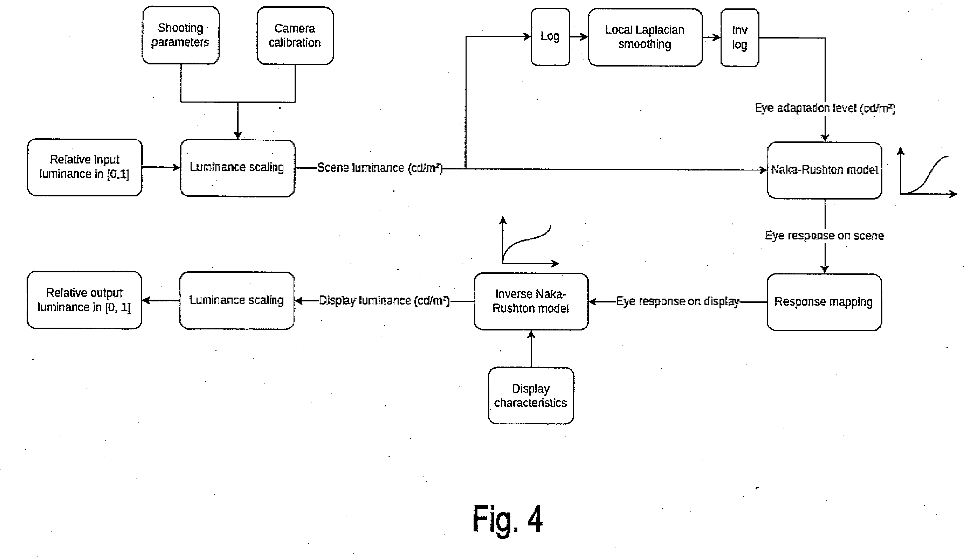

In Fig. 4, a schematic representation of a further embodiment of the method according to the present invention is illustrated. According to this embodiment, an HDR input image file with relative input luminance is provided. The values of the input image file are calibrated in order to provide an HDR image file with absolute luminance values. During the calibration, shooting parameters (such as aperture, ISO level and exposure time) and camera parameters (such as sensitivity parameters of the image sensor) can be utilized to calculate the absolute luminance values more precisely. Subsequently, the calibrated image file can be filtered by applying the Local Laplacian Filter, which is performed in the illustrated embodiment in the logarithmic domain. After applying the Local Laplacian Filter, the Naka-Rushton function (also referred to as the Naka-Rushton model) can be applied to the filtered image file. Subsequently, response mapping is conducted on the output of the Naka-Rushton function, and the inverse Naka-Rushton function is applied. Preferably, the display characteristics can be considered during the application of the inverse Naka-Rushton function. Finally, the absolute luminance values are converted to relative output luminance values, which can then be displayed on a display device,
**[0053]** In Fig. 5, a schematic representation of implementing the Naka-Rushton model according to some embodiments of the present invention is illustrated. The input HDR image is filtered with a Local Laplacian Filter, giving the eye adaptation image. Let a pixel be located at (x,y), then the eye adaptation intensity at (x,y) allows to compute the corresponding Naka-Rushton function that is applied to the input intensity at (x,y) in order to obtain the output eye response at (x, y).

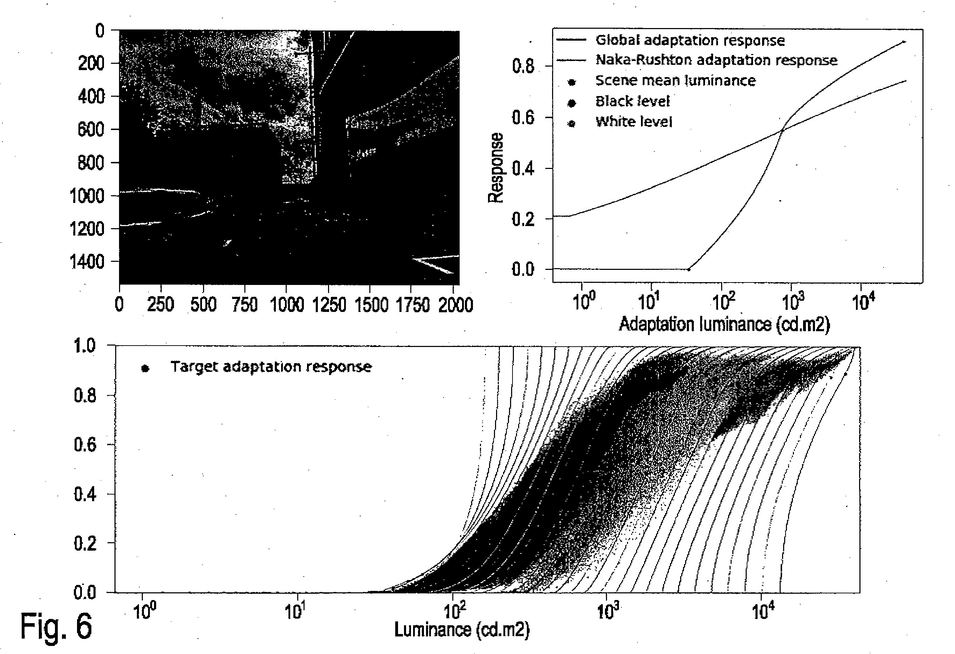

In Fig. 6, a schematic representation of a global tone curve (top right) and local tone curves (bottom) according to some embodiments of the present invention are illustrated. The global tone curve and the local tone curves can be implemented to map the input luminance to an output response, given the eye adaptation luminance. The grey dots correspond to the above image pixel density at each coordinate.

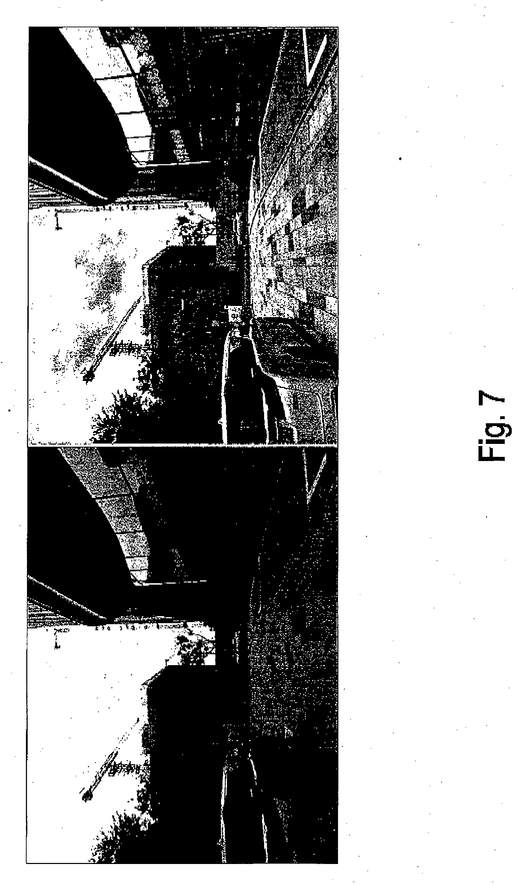

In Fig. 7, a comparison of processing an HDR image with a method according to the prior art (left side) and with the method according to the present invention (right side) is shown. Compared to the methods known from the prior art, the solution provided with the present invention will handle well any input and output dynamic range. As can be seen from the comparison in Fig. 7, the method according to the present invention allows to produce natural-looking exposure and contrast characteristics, while having very few artifacts like halos. The exposure and contrast characteristic will be close to what one would see by looking at the real-world scene, and may automatically adapt to the scene luminance, from night scenes to portraits and outdoor scenes. If necessary, the image appearance can be changed by the user, for example to increase furthermore the contrast or boost the image shadows.

## LIST OF REFERENCES

[1] S. Paris, S. W. Hasinoff, J. Kautz, Local Laplacian Filters: Edge-aware Image Processing with a Laplacian Pyramid, Communications of the ACM, March 2015, Vol. 58, No. 3
[2] Sumanta N. Pattanaik, Jack Tumblin, Hector Yee, Donald P. Greenberg, Time-Dependent Visual Adaptation For Fast Realistic Image Display, Proceedings of the 27th annual conference on Computer graphics and interactive techniques, July 2000, pages 47-54, https://doi.org/10.1145/344779.344810
[3] Patrick Ledda, Luis Paulo Santos, Alan Chalmers, A Local Model of Eye Adaptation for High Dynamic Range Images, Proceedings of the 3rd international conference on Computer graphics, virtual reality, visualisation and interaction in Africa, November 2004, Pages 151-160, https://doi.org/10.1145/1029949.1029978

## LIST OF ABBREVIATIONS

HDR     High dynamic range
LDR     Low dynamic range
HVS     Human vision system
TM      Tone-mapping

## Claims

1. A method for converting a high dynamic range, HDR, image file into a low dynamic range, LDR, image file, wherein the method comprises the following steps:

   - providing (110) an HDR image file to a processing unit (14);
   - applying (120), by the processing unit (14), a smoothing filter on the provided HDR image file;
   - applying (130), by the processing unit (14), a Naka Rushton function on the HDR image file using the filtered image file as eye adaptation intensity;
   - conducting (140), by the processing unit (14), a response mapping on the output of the Naka-Rushton function; and
   - applying (150), by the processing unit (14), an inverse Naka-Rushton function on the output of the response mapping.

2. The method according to claim 1, wherein providing an HDR image file comprises the following steps:

   - providing a first HDR image file comprising relative luminance values to the processing unit (14);
   - providing metadata to the processing unit (14), wherein the metadata comprises at least one of an exposure parameter of an image, a light sensitivity parameter of an image, and an aperture parameter of an image; and
   - calculating, by the processing unit (14), a second HDR image file comprising absolute luminance values from the first HDR image file and the provided metadata.

3. The method according to claim 1 or 2, wherein applying a smoothing filter on the provided HDR image file comprises the following steps:

- calculating, by the processing unit (14), a logarithmic representation of the HDR image file;
- applying, by the processing unit (14), the Local Laplacian Filter on the logarithmic representation of the HDR image file; and
- calculating, by the processing unit (14), an inverse logarithmic operator on the Local Laplacian filtered HDR image file.

4. The method according to any of claims 1 to 3, wherein conducting a response mapping comprises the step of applying local tone curves on the output of the Naka-Rushton function.

5. The method according to claim 4, wherein the local tone curves are defined by non-linear functions.

6. The method according to claim 5, wherein the local tone curves are defined by Bezier curves.

7. A method for displaying a low dynamic range, LDR, image file on a display device (10), comprising the method for converting a high dynamic range, HDR, image file into a low dynamic range, LDR, image file according to any of claims 1 to 6, and the following steps:

   - converting the output of the inverse Naka-Rushton function comprising absolute luminance values to an output image file comprising relative luminance values; and
   - displaying the output image file on the display device (10).

8. An image signal processing apparatus for converting a high dynamic range, HDR, image file into a low dynamic range, LDR, image file, wherein the signal processing apparatus comprises a storage unit (12) and a processing unit (14), and wherein the processing unit (14) is configured to:

   - receive an HDR image file to be converted;
   - apply a smoothing filter on the received HDR image file;
   - apply a Naka-Rushton function on the HDR image file using the filtered image file as eye adaptation intensity;
   - conduct a response mapping on the output of the Naka-Rushton function; and
   - apply an inverse Naka-Rushton function on the output of the response mapping.

9. The apparatus according to claim 8, wherein the processing unit (14) is further configured to:

   - receive a first HDR image file comprising relative luminance values;
   - receive metadata from a camera device, wherein the metadata comprises at least one of an exposure parameter of an image, a light sensitivity parameter of an image, and an aperture parameter of an image; and
   - calculate a second HDR image file comprising absolute luminance values from the first HDR image file and the received metadata.

10. The apparatus according to claim 8 or 9, wherein the processing unit (14) is further configured to:

    - calculate a logarithmic representation of the HDR image file;
    - apply the Local Laplacian Filter on the logarithmic representation of the HDR image file; and
    - calculate an inverse logarithmic operator on the Local Laplacian filtered HDR image file.

11. The apparatus according to any of claims 8 to 10, wherein the processing unit (14) is further configured to:

    - apply local tone curves on the output of the Naka-Rushton function.

12. The apparatus according to claim 11, wherein the local tone curves are defined by non-linear functions.

13. The apparatus according to claim 11, wherein the local tone curves are defined by Bezier curves.

14. A display device (10) comprising a display panel (16) for displaying a low dynamic range, LDR, image, and the apparatus according to any of claims 8 to 13.

Fig. 1

100

```
┌─────────────────────────────────┐
│   providing an HDR image file   │────  110
└─────────────────────────────────┘
                 │
                 ▼
┌─────────────────────────────────┐
│   applying a Local Laplacian Filter │────  120
│   on the provided HDR image file │
└─────────────────────────────────┘
                 │
                 ▼
┌─────────────────────────────────┐
│  applying a Naka Rushton function on │
│     the HDR image file using the    │────  130
│   Local Laplacian filtered image file │
│       as eye adaptation intensity   │
└─────────────────────────────────┘
                 │
                 ▼
┌─────────────────────────────────┐
│   conducting a response mapping on │────  140
│  the output of the Naka-Rushton model │
└─────────────────────────────────┘
                 │
                 ▼
┌─────────────────────────────────┐
│   applying an inverse Naka-Rushton │
│      model on the output of the    │────  150
│         response mapping           │
└─────────────────────────────────┘
```

## Fig. 2

storage unit 12

processing unit 14

display panel 16

10

Fig. 3

Fig. 4

Fig. 5

EP 4 358 017 A1

Fig. 6

Fig. 7

Europäisches
Patentamt

European
Patent Office

Office européen
des brevets

# EUROPEAN SEARCH REPORT

Application Number

EP 22 29 0057

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DANIEL TAMBURRINO, DAVID ALLEYSSON, LAURENCE MEYLAN, SABINE SÜSSTRUNK: "Digital camera workflow for high dynamic range images usinga model of retinal processing", SPIE, PO BOX 10 BELLINGHAM WA 98227-0010 USA, vol. 6817, 3 March 2008 (2008-03-03), pages 1-12, XP040431488, | 1-6,8-14 | INV. G06T5/00 |
| Y | * abstract; figure 2 * * sections "2. Workflow", "2.1 Creating HDR images", "2.3 tone mapping" * ----- | 7 | |
| Y | CYRIAC PRAVEEN ET AL: "Vision models fine-tuned by cinema professionals for High Dynamic Range imaging in movies", MULTIMEDIA TOOLS AND APPLICATIONS, vol. 80, no. 2, 15 September 2020 (2020-09-15), - 15 September 2020 (2020-09-15), pages 2537-2563, XP037335935, ISSN: 1380-7501, DOI: 10.1007/S11042-020-09532-Y * sections "2 Some vision principles relevant for HDR imaging", "3.1 Tone mapping ofungraded footage", "3.1.1 Light adaptation", "3.3 Inverse tone mapping of graded content" * ----- | 7 | TECHNICAL FIELDS SEARCHED (IPC) G06T |

The present search report has been drawn up for all claims

| Place of search | Date of completion of the search | Examiner |
|---|---|---|
| Munich | 30 March 2023 | Eckert, Lars |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. PARIS ; S. W. HASINOFF ; J. KAUTZ.** Local Laplacian Filters: Edge-aware Image Processing with a Laplacian Pyramid. *Communications of the ACM,* March 2015, vol. 58 (3
- **SUMANTA N. PATTANAIK ; JACK TUMBLIN ; HECTOR YEE ; DONALD P. GREENBERG.** Time-Dependent Visual Adaptation For Fast Realistic Image Display. *Proceedings of the 27th annual conference on Computer graphics and interactive techniques,* July 2000, 47-54, https://doi.org/10.1145/344779.344810

- **PATRICK LEDDA ; LUIS PAULO SANTOS ; ALAN CHAIMERS.** A Local Model of Eye Adaptation for High Dynamic Range Images. *Proceedings of the 3rd international conference on Computer graphics, virtual reality, visualisation and interaction in Africa,* November 2004, 151-160, https://doi.org/10.1145/1029949.1029978